# EUROPEAN PATENT APPLICATION

(11) **EP 3 148 286 A1**
(43) Date of publication of application: **29.03.2017**
(21) Application number: 16168515.1
(22) Date of filing: 05.05.2016
(51) Int. Cl.: H04W 84/10, H04W 84/18, H04L 29/08, H04W 4/00, H04W 8/26

(54) **SYSTEM, METHOD AND APPARATUS FOR DATA COMMUNICATION**

(30) Priority: 22.09.2015 CN 201510609698
(71) Applicant: Xiaomi Inc., Beijing 100085 (CN)
(72) Inventor: HOU, Enxing, Haidian District, Beijing 100085 (CN); LIU, Xin, Haidian District, Beijing 100085 (CN); ZHANG, Yanlu, Haidian District, Beijing 100085 (CN)
(74) Representative: Sadler, Peter Frederick

(57) **Abstract**

A system includes: a server (120), a Zigbee gateway (140), and at least a Zigbee device (160), wherein the server (120) is configured to receive a control instruction, wherein the control instruction carries identification of the Zigbee device (160); the server (120) is configured to forward the control instruction to the Zigbee gateway (140); the Zigbee gateway (140) is configured to receive the control instruction sent by the server (120) via the target network chip (142), acquire the identification of the Zigbee device (160) carried in the control instruction; and forward the control instruction to the corresponding Zigbee device (160) via the Zigbee chip (144); and the Zigbee device (160) is configured to receive the control instruction forwarded by the Zigbee gateway, wherein a network type corresponding to the target network chip (142) is different from that of a Zigbee network.

## Description

### TECHNICAL FIELD

The present disclosure generally relates to the field of smart home, and more particularly, to a system, a method and an apparatus for data communication.

### BACKGROUND

Zigbee technology is a technology applied in short range and two-way wireless communication, having characteristics of low power consumption, low speeds and low costs. Zigbee technology is widely applied in occasions where low power consumption is strictly required.

A device using the Zigbee technology is called a Zigbee device. The Zigbee device may be a smog sensor, a smart lamp and the like. A Zigbee network usually has a plurality of Zigbee devices and a Zigbee gateway. Wherein the Zigbee gateway is used to connect respective Zigbee devices for data communication and send the data of respective Zigbee devices to a server on the Internet. For example, smog data collected by the smog sensor is sent to the server on the Internet.

### SUMMARY

In order to solve the problem that a mobile terminal cannot send a control instruction to the Zigbee device, the present disclosure provides a system, a method and an apparatus for data communication. The technical solution is as follows.

According to a first aspect of embodiments of the present disclosure, there is provided a system for data communication, wherein the system includes: a server, a Zigbee gateway connected with the server, and at least a Zigbee device connected with the Zigbee gateway, and a target network chip and a Zigbee chip are provided on the Zigbee gateway at the same time, wherein
the server is configured to receive a control instruction, wherein the control instruction carries identification of the Zigbee device;
the server is configured to forward the control instruction to the Zigbee gateway;
the Zigbee gateway is configured to receive the control instruction sent by the server via the target network chip; acquire the identification of the Zigbee device carried in the control instruction; and forward the control instruction to the corresponding Zigbee device via the Zigbee chip; and
the Zigbee device is configured to receive the control instruction forwarded by the Zigbee gateway,
wherein a network type corresponding to the target network chip is different from that of a Zigbee network.

Optionally, the control instruction further carries identification of the Zigbee gateway; and
the server is configured to acquire the identification of the Zigbee gateway carried in the control instruction; and forward the control instruction to the Zigbee gateway according to the identification of the Zigbee gateway.

Optionally, the server is configured to inquire identification of the Zigbee gateway in a prestored corresponding relationship according to the identification of the Zigbee device; add the identification of the Zigbee gateway to the control instruction; and send the control instruction to the Zigbee gateway according to the identification of the Zigbee gateway.

Optionally, the Zigbee device is further configured to report a corresponding relationship between the identification of the Zigbee gateway and the identification of the Zigbee device to the server when the Zigbee device accesses to the Zigbee gateway; and
the server is configured to store the corresponding relationship.

Optionally, a network type corresponding to the target network chip is a wireless fidelity network;
the identification of the Zigbee device is a media access control address; and
the identification of the Zigbee gateway is a device identification.

According to a second aspect of embodiments of the present disclosure, there is provided a method for data communication, including:
receiving a control instruction, wherein the control instruction carries identification of a Zigbee device; and
forwarding the control instruction to a Zigbee gateway, wherein the Zigbee gateway is configured to receive the control instruction via a target network chip; the Zigbee gateway is further configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.
Optionally, the control instruction carries the identification of the Zigbee device; and
the forwarding the control instruction to the Zigbee gateway includes:
acquiring identification of the Zigbee gateway carried in the control instruction; and
forwarding the control instruction to the Zigbee gateway according to the identification of the Zigbee gateway.

Optionally, the forwarding the control instruction to the Zigbee gateway includes:
inquiring identification of the Zigbee gateway in a prestored corresponding relationship according to the identification of the Zigbee device;
adding the identification of the Zigbee gateway to the control instruction; and
sending the control instruction to the Zigbee gateway according to the identification of the Zigbee gateway.

Optionally, the method further includes:
receiving a corresponding relationship sent by the Zigbee device, wherein the corresponding relationship is reported when the Zigbee device accesses to the Zigbee gateway; and the corresponding relationship is a corresponding relationship between the identification of the Zigbee gateway and the identification of the Zigbee device; and
storing the corresponding relationship.
Optionally, a network type corresponding to the target network chip is a wireless fidelity network;

the identification of the Zigbee device is a media access control address; and
the identification of the Zigbee gateway is a device identification.

According to a third aspect of embodiments of the present disclosure, there is provided an apparatus for data communication, including:
a first receiving module configured to receive a control instruction, wherein the control instruction carries identification of a Zigbee device; and
a sending module configured to forward the control instruction to a Zigbee gateway, wherein the Zigbee gateway is configured to receive the control instruction via a target network chip; the Zigbee gateway is further configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

Optionally, the control instruction carries the identification of the Zigbee device; and
the sending module is configured to acquire identification of the Zigbee gateway carried in the control instruction; and forward the control instruction to the Zigbee gateway according to the identification of the Zigbee gateway.

Optionally, the apparatus further includes:
an inquiring module configured to inquire identification of the Zigbee gateway in a prestored corresponding relationship according to the identification of the Zigbee device, wherein
the sending module is configured to add the identification of the Zigbee gateway to the control instruction; and send the control instruction to the Zigbee gateway according to the identification of the Zigbee gateway.

Optionally, the apparatus further includes:
a second receiving module configured to receive a corresponding relationship sent by the Zigbee device, wherein the corresponding relationship is reported when the Zigbee device accesses to the Zigbee gateway; and the corresponding relationship is a corresponding relationship between the identification of the Zigbee gateway and the identification of the Zigbee device; and
a storing module configured to store the corresponding relationship.

Optionally, a network type corresponding to the target network chip is a wireless fidelity network;
the identification of the Zigbee device is a media access control address; and
the identification of the Zigbee gateway is a device identification.

According to a fourth aspect of embodiments of the present disclosure, there is provided an apparatus for data communication, including:
a processor; and
a memory for storing instructions executable by the processor,
wherein the processor is configured to:
receive a control instruction, wherein the control instruction carries identification of a Zigbee device; and
forward the control instruction to a Zigbee gateway, wherein the Zigbee gateway is configured to receive the control instruction via a target network chip; the Zigbee gateway is configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

According to a fifth aspect of embodiments of the present disclosure, there is provided a Zigbee gateway, including:
a control chip;
a memory for storing instructions executable by the control chip, and
a target network chip and a Zigbee chip connected with the control chip;
wherein the control chip is configured to perform:
receiving a control instruction via the target network chip, wherein the control instruction carries identification of a Zigbee device;
acquiring the identification of the Zigbee device carried in the control instruction; and
forwarding the control instruction to the Zigbee device corresponding to the identification via the Zigbee chip,
wherein a network type corresponding to the target network chip is different from that of a Zigbee network.

The technical scheme according to embodiments of the present disclosure may have the following beneficial effects.

The server receives a control instruction, wherein the control instruction carries identification of the Zigbee device; the server forwards the control instruction to the Zigbee gateway; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and the Zigbee device may be achieved by the server, and the mobile terminal may send the control instruction to the Zigbee device.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, and serve to explain the principles of the disclosure.
Fig. 1 is a block diagram of a system for data communication according to an exemplary embodiment of the present disclosure;
Fig. 2 is a flow chart illustrating a method for data communication according to an exemplary embodiment of the present disclosure;
Fig. 3 is a flow chart illustrating a method for data communication according to another exemplary embodiment of the present disclosure;
Fig. 4 is a flow chart illustrating a method for data communication according to another exemplary embodiment of the present disclosure;
Fig. 5 is a block diagram of an apparatus for data communication according to an exemplary embodiment of the present disclosure;
Fig. 6 is a block diagram of an apparatus for data communication according to another exemplary embodiment of the present disclosure;
Fig. 7 is a block diagram of an apparatus for data communication according to an exemplary embodiment of the present disclosure; and
Fig. 8 is a block diagram of a Zigbee gateway according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Taking the Zigbee device being a smart lamp as an example, the mobile terminal has a need to send a control instruction to the Zigbee device. The control instruction may be to turn on the smart lamp or turn off the smart lamp. However, because the Zigbee device is located in a Zigbee network provided by the Zigbee gateway, the addressing to the Zigbee gateway and the addressing to the Zigbee device need to be solved when the mobile terminal sends the control instruction to the Zigbee device.

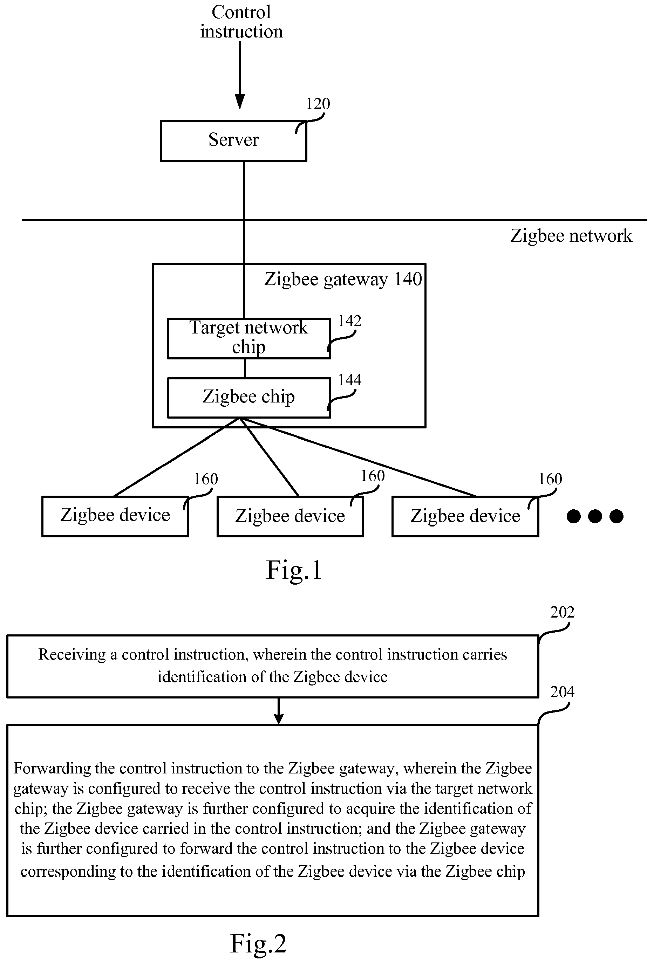

Fig. 1 is a block diagram of a system for data communication according to an exemplary embodiment of the present disclosure. The system for data communication includes: a server 120, a Zigbee gateway 140 connected with the server 120, and at least a Zigbee device 160 connected with the Zigbee gateway 140.

A target network chip 142 and a Zigbee chip 144 are provided on the Zigbee gateway 140 at the same time.

The server 120 is configured to receive a control instruction, wherein the control instruction carries identification of the Zigbee device 160.

The server 120 is further configured to forward the control instruction to the Zigbee gateway 140.

The Zigbee gateway 140 is configured to receive the control instruction sent by the server 120 via the target network chip 142; acquire the identification of the Zigbee device 160 carried in the control instruction; and forward the control instruction to the corresponding Zigbee device 160 via the Zigbee chip 144.

The Zigbee device 160 is configured to receive the control instruction forwarded by the Zigbee gateway 140.

Wherein a network type corresponding to the target network chip is different from that of a Zigbee network.

Accordingly, in the system for data communication provided by embodiments of the present disclosure, the server receives a control instruction, wherein the control instruction carries identification of the Zigbee device; the server forwards the control instruction to the Zigbee gateway according to the identification of the Zigbee device; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and the Zigbee device may be achieved by the server, and the mobile terminal may send the control instruction to the Zigbee device.

For example, based on the embodiment as shown in Fig. 1, the control instruction further carries identification of the Zigbee gateway 140; and

the server 120 is configured to acquire the identification of the Zigbee gateway 140 carried in the control instruction; and forward the control instruction to the Zigbee gateway 140 according to the identification of the Zigbee gateway 140.

For example, based on the embodiment as shown in Fig. 1, the server 120 is configured to inquire identification of the Zigbee gateway 140 in a prestored corresponding relationship according to the identification of the Zigbee device 160; add the identification of the Zigbee gateway 140 to the control instruction; and send the control instruction to the Zigbee gateway 140 according to the identification of the Zigbee gateway 140.

For example, based on the embodiment as shown in Fig. 1, the Zigbee device 160 is further configured to report a corresponding relationship between the identification of the Zigbee gateway 140 and the identification of the Zigbee device 160 to the server 120 when the Zigbee device 160 accesses to the Zigbee gateway 140; and
the server 120 is configured to store the corresponding relationship.

For example, based on the embodiment as shown in Fig. 1, a network type corresponding to the target network chip is a WIFI (Wireless-Fidelity) network; the identification of the Zigbee device is a MAC (Media Access Control) address; and the identification of the Zigbee gateway is a DID (device id).

Fig. 2 is a flow chart illustrating a method for data communication according to an exemplary embodiment of the present disclosure. The present embodiment takes the method for data communication being applied in the server as shown in Fig. 1 as an example. The method includes:
in step 202, a control instruction is received, wherein the control instruction carries identification of the Zigbee device.

For example, the control instruction is a control instruction sent by a mobile device, for example an instruction to turn on the smart lamp.

For example, the identification of the Zigbee device is a MAC address.

In step 204, the control instruction is forwarded to the Zigbee gateway, wherein the Zigbee gateway is configured to receive the control instruction via the target network chip; the Zigbee gateway is further configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

Accordingly, in the method for data communication provided by the present embodiment, the server receives a control instruction, wherein the control instruction carries identification of the Zigbee device; the server forwards the control instruction to the Zigbee gateway; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and the Zigbee device may be achieved by the server, and the mobile terminal may send the control instruction to the Zigbee device.

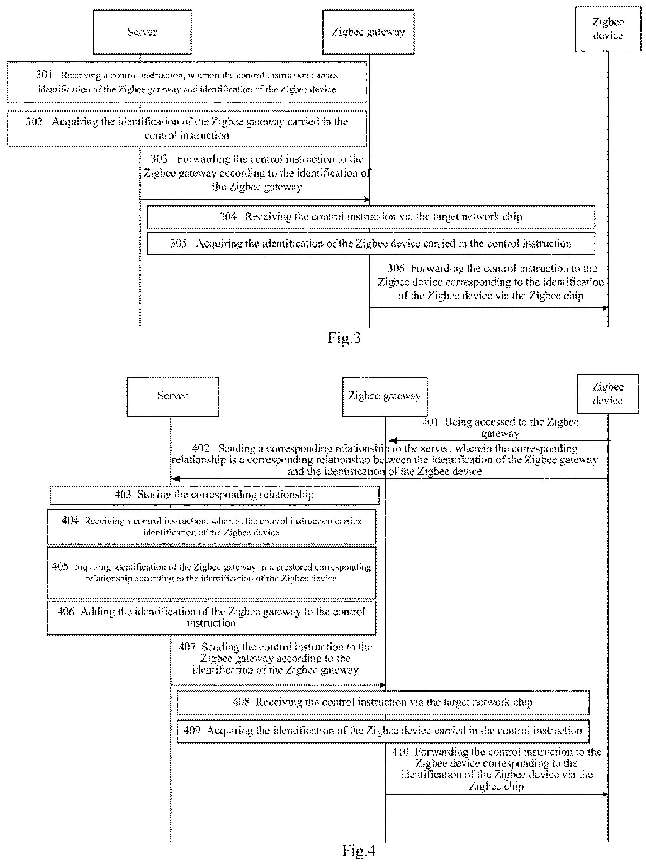

Fig. 3 is a flow chart illustrating a method for data communication according to another exemplary embodiment of the present disclosure. The present embodiment takes the method for data communication being applied in the system for data communication as shown in Fig. 1 as an example. The method includes:
in step 301, the server receives a control instruction, wherein the control instruction carries identification of the Zigbee gateway and identification of the Zigbee device.

For example, the control instruction is a control instruction sent by a mobile device, for example an instruction to turn on the smart lamp.

For example, both the identification of the Zigbee gateway and the identification of the Zigbee device are MAC addresses.

In step 302, the server acquires the identification of the Zigbee gateway carried in the control instruction;
in step 303, the server forwards the control instruction to the Zigbee gateway according to the identification of the Zigbee gateway;
in step 304, the Zigbee gateway receives the control instruction via the target network chip,
wherein a network type corresponding to the target network chip is different from that of a Zigbee network. For example, the target network chip is a WIFI chip.

In step 305, the Zigbee gateway acquires the identification of the Zigbee device carried in the control instruction;
in step 306, the Zigbee gateway forwards the control instruction to the Zigbee device corresponding to the identification of the Zigbee device via the Zigbee chip.

The Zigbee device receives the control instruction, and preforms the control instruction.

Accordingly, in the method for data communication provided by the present embodiment, the server receives a control instruction, wherein the control instruction carries identification of the Zigbee gateway and identification of the Zigbee device; the server forwards the control instruction to the Zigbee gateway according to the identification of the Zigbee gateway; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and the Zigbee device may be achieved by the server, and the mobile terminal may send the control instruction to the Zigbee device.

In the embodiment as shown in Fig. 3, the control instruction needs to carry both the identification of the Zigbee gateway and the identification of the Zigbee device at the same time, which causes that the mobile terminal may generate and send the control instruction only when it knows the two identifications at the same time. In order to make the mobile terminal generate and send the control instruction easily, an embodiment as shown in Fig. 4 is provided.

Fig. 4 is a flow chart illustrating a method for data communication according to another exemplary embodiment of the present disclosure. The present embodiment takes the method for data communication being applied in the system for data communication as shown in Fig. 1 as an example. The method includes:
in step 401, the Zigbee device accesses to the Zigbee gateway;
the Zigbee device may access to the Zigbee gateway, and the Zigbee gateway is a gateway provided with the target network chip and the Zigbee chip at the same time.

For example, the target network chip is a WIFI chip. That is, the Zigbee gateway has an ability to communicate both in the WIFI network and the Zigbee network at the same time.

In step 402, the Zigbee device sends a corresponding relationship to the server, wherein the corresponding relationship is a corresponding relationship between the identification of the Zigbee gateway and the identification of the Zigbee device.

The Zigbee device needs to prestore identification of the server, wherein the identification of the server may be an IP address of the server.

Then, after the Zigbee device accesses to the Zigbee gateway, a corresponding relationship is reported to the server. The corresponding relationship is a corresponding relationship between the identification of the Zigbee gateway and the identification of the Zigbee device.

For example, the identification of the Zigbee gateway is a DID, and the identification of the Zigbee device is a MAC address. The DID is used in addressing a device in the WIFI network, and the MAC address is used in addressing a device in the Zigbee network.

In step 403, the server stores the corresponding relationship.

The server stores the corresponding relationships reported by respective Zigbee devices. Table 1 schematically illustrates the corresponding relationships:

**Table 1**

| | |
|---|---|
| MAC address 1 of a Zigbee device 1 | DID1 of a Zigbee gateway 1 |
| MAC address 2 of a Zigbee device 2 | DID1 of a Zigbee gateway 1 |
| MAC address 3 of a Zigbee device 3 | DID2 of a Zigbee gateway 2 |
| MAC address 4 of a Zigbee device 4 | DID2 of a Zigbee gateway 2 |
| MAC address 5 of a Zigbee device 5 | DID2 of a Zigbee gateway 2 |

In step 404, the server receives a control instruction, wherein the control instruction carries identification of the Zigbee device.

In the present embodiment, the control instruction only needs to carry the identification of the Zigbee device.

In step 405, the server inquires identification of the Zigbee gateway in a prestored corresponding relationship according to the identification of the Zigbee device;
in step 406, the server adds the identification of the Zigbee gateway to the control instruction.

For example, the control instruction is "DID1 of a Zigbee gateway 1, MAC address 1 of a Zigbee device 1, a command of turning on".

In step 407, the server sends the control instruction to the Zigbee gateway according to the identification of the Zigbee gateway.

The DID is used in addressing a device in the WIFI network. The server sends the control instruction to the Zigbee gateway according to the DID of the Zigbee gateway.

In step 408, the Zigbee gateway receives the control instruction via the target network chip,
wherein a network type corresponding to the target network chip is different from that of a Zigbee network. For example, the target network chip is a WIFI chip.

In step 409, the Zigbee gateway acquires the identification of the Zigbee device carried in the control instruction;
in step 410, the Zigbee gateway forwards the control instruction to the Zigbee device corresponding to the identification of the Zigbee device via the Zigbee chip.

The Zigbee device receives the control instruction, and preforms the control instruction.

Accordingly, in the method for data communication provided by the present embodiment, the server receives a control instruction, wherein the control instruction carries identification of the Zigbee device; the server inquires identification of the Zigbee gateway in a prestored corresponding relationship according to the identification of the Zigbee device, and forwards the control instruction to the Zigbee gateway according to the identification of the Zigbee gateway; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and the Zigbee device may be achieved by the server, and the mobile terminal may send the control instruction to the Zigbee device.

In the method for data communication provided by the present embodiment, since the corresponding relationship between the identification of the Zigbee device and the identification of the Zigbee gateway is prestored in the server, only the identification of the Zigbee device needs to be carried when the control instruction is generated, which reduces the difficulty in generating the control instruction.

In an exemplary example, a user purchases a smart lamp which adopts the Zigbee technology. The manufacturer of the smart lamp further sets up a server providing backstage service in the Internet. The user installs application programs provided by the manufacturer in his own cellphone. For example, a two-dimension code is on a housing of the smart lamp. After the user scans the two-dimension code through the application program to acquire the MAC address of the smart lamp, the smart lamp is bound as a smart furniture device in his own home. When the smart lamp accesses to the Zigbee gateway, the corresponding relationship between the MAC address and the DID of the Zigbee gateway is sent to the server. The server saves the corresponding relationship.

If the user needs to turn on the smart lamp, he/she clicks an "on" button in the application program. Then the application program generates a turning on control instruction carrying the MAC address of the smart lamp. The application program sends the turning on control instruction to the server. The DID of the Zigbee gateway is searched out by the server according to the MAC address of the smart lamp, and the server adds the DID of the Zigbee gateway to the turning on control instruction. Then the server sends the turning on instruction to the Zigbee gateway. After the Zigbee gateway receives the turning on control instruction, the turning on control instruction is sent to the smart lamp according to the MAC address of the smart lamp. The smart lamp is turned on according to the turning on control instruction.

In the following embodiments of apparatuses according to the present disclosure, the apparatuses may be configured to perform the method in the above embodiments of the present disclosure. Details not disclosed in the embodiments of apparatuses may be referred to the embodiments of methods.

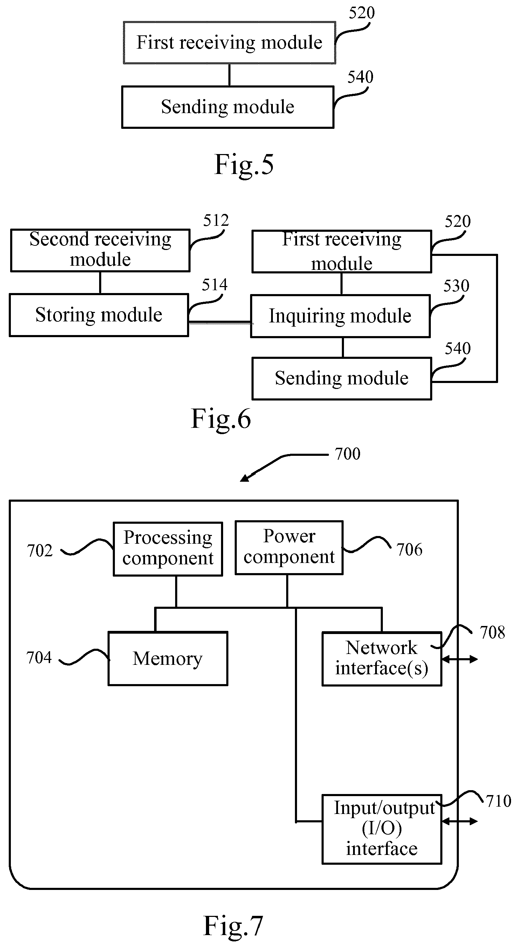

Fig. 5 is a block diagram of an apparatus for data communication according to an exemplary embodiment of the present disclosure. As shown in Fig. 5, the apparatus for data communication may constitute all or a part of the server as shown in Fig. 1 by software, hardware or a combination thereof. The apparatus includes, but not limited to:
a first receiving module 520 configured to receive a control instruction, wherein the control instruction carries identification of the Zigbee device; and
a sending module 540 configured to forward the control instruction to the Zigbee gateway, wherein the Zigbee gateway is configured to receive the control instruction via the target network chip; the Zigbee gateway is further configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

Accordingly, in the apparatus for data communication provided by the present embodiment, a control instruction is received, wherein the control instruction carries identification of the Zigbee device; the control instruction is forwarded to the Zigbee gateway; and the Zigbee gateway forwards the control instruction to a Zigbee device. It solves the problem that a mobile terminal cannot send a control instruction to the Zigbee device; and by forwarding of the server, it achieves the effect that the mobile terminal only needs to communicate with the server, then addressing to the Zigbee gateway and addressing to the Zigbee device may be achieved by the apparatus for data communication, and the mobile terminal may send the control instruction to the Zigbee device.

Fig. 6 is a block diagram of an apparatus for data communication according to an exemplary embodiment of the present disclosure. As shown in Fig. 6, the apparatus for data communication may constitute all or a part of the server as shown in Fig. 1 by software, hardware or a combination thereof. The apparatus includes, but not limited to:
a first receiving module 520 configured to receive a control instruction, wherein the control instruction carries identification of the Zigbee device; and
a sending module 540 configured to forward the control instruction to the Zigbee gateway, wherein the Zigbee gateway is configured to receive the control instruction via the target network chip; the Zigbee gateway is further configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

In a first possible implementation, the control instruction carries the identification of the Zigbee device; and
the sending module 540 is configured to acquire identification of the Zigbee gateway carried in the control instruction; and forward the control instruction to the Zigbee gateway according to the identification of the Zigbee gateway.

In a second possible implementation, the apparatus further includes:
an inquiring module 530 configured to inquire identification of the Zigbee gateway in a prestored corresponding relationship according to the identification of the Zigbee device, wherein
the sending module 540 configured to add the identification of the Zigbee gateway to the control instruction; and send the control instruction to the Zigbee gateway according to the identification of the Zigbee gateway.

In a second possible implementation, the apparatus further includes:
a second receiving module 512 configured to receive a corresponding relationship sent by the Zigbee device, wherein the corresponding relationship is reported when the Zigbee device accesses to the Zigbee gateway; and the corresponding relationship is a corresponding relationship between the identification of the Zigbee gateway and the identification of the Zigbee device; and
a storing module 514 configured to store the corresponding relationship.

For example, a network type corresponding to the target network chip is a wireless fidelity network; the identification of the Zigbee device is a MAC address; and the identification of the Zigbee gateway is a DID.

With respect to the apparatuses in the above embodiments, the specific manners for performing operations for individual modules therein have been described in detail in the embodiments regarding the relevant methods, which will not be elaborated herein.

One exemplary embodiment of the present disclosure provides an apparatus for data communication, which can implement the method for data communication provided by the present disclosure. The apparatus for data communication includes: a processor; and a memory for storing instructions executable by the processor,
wherein the processor is configured to perform:
receiving a control instruction, wherein the control instruction carries identification of the Zigbee device; and
forwarding the control instruction to the Zigbee gateway, wherein the Zigbee gateway is configured to receive the control instruction via the target network chip; the Zigbee gateway is configured to acquire the identification of the Zigbee device carried in the control instruction; and the Zigbee gateway is further configured to forward the control instruction to the Zigbee device corresponding to the identification of the Zigbee device via the Zigbee chip,
wherein a network type corresponding to the target network chip is different from that of a Zigbee network.

Fig. 7 is a block diagram of an apparatus for data communication according to another exemplary embodiment of the present disclosure. For example, the apparatus 700 may be provided as a device at a network side. Referring to Fig. 7, the apparatus 700 includes a processing component 702 that further includes one or more processors, and memory resources represented by a memory 704 for storing instructions executable by the processing component 702, such as application programs. The application programs stored in the memory 704 may include one or more modules each corresponding to a set of instructions. Further, the processing component 702 is configured to execute the instructions to perform the above described method for data communication.

The apparatus 700 may further include a power component 706 configured to perform power management of the apparatus 700, wired or wireless network interface(s) 708 configured to connect the apparatus 700 to a network, and an input/output (I/O) interface 710. The apparatus 700 may operate based on an operating system stored in the memory 704, such as Windows Server^{™}, Mac OS X^{™}, Unix^{™}, Linux^{™}, FreeBSD^{™}, or the like.

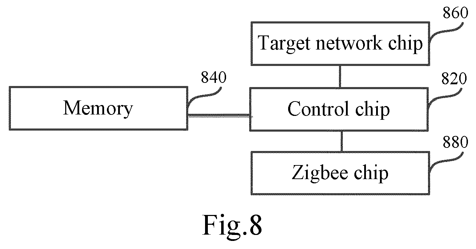

Fig. 8 is a block diagram of a Zigbee gateway according to another embodiment. The gateway includes: a control chip 820; a memory 840 for storing instructions executable by the control chip 820, and a target network chip 860 and a Zigbee chip 880 connected with the control chip 820;
wherein the control chip 820 is configured to perform:
receiving the control instruction via the target network chip 860, wherein the control instruction carries identification of the Zigbee device;
acquiring the identification of the Zigbee device carried in the control instruction; and
forwarding the control instruction to the Zigbee device corresponding to the identification via the Zigbee chip,
wherein a network type corresponding to the target network chip is different from that of a Zigbee network.

ZigBee devices operate according to the ZigBee network communication protocol, which is based on the IEEE 802.15.4 standard. The IEEE 802.15.4 defines the specifications for physical layer and media access control layer (MAC), and the ZigBee alliance defines the upper-layer specifications comprising the standards at the network layer and the application layer. An example of the ZigBee specification is found in the ZigBee Document 053474r06, Version 1.0 available at http://www3.nd.edu/~mhaenggi/ee67011/zigbee.pdf. Another example of the ZigBee specification is found in ZigBee Document 053474r20, available at http://www,zigbee.org/down load /standards-zigbee-specification/.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A system for data communication, comprising: a server (120), a Zigbee gateway (140) connected with the server (120), and at least one Zigbee device (160) connected with the Zigbee gateway (140), wherein a target network chip (142) and a Zigbee chip (144) are provided on the Zigbee gateway (140) at the same time, and wherein:
the server (120) is configured to receive a control instruction, wherein the control instruction carries identification of the Zigbee device (160);
the server (120) is configured to forward the control instruction to the Zigbee gateway (140);
the Zigbee gateway (140) is configured to receive the control instruction sent by the server (120) via the target network chip (142), acquire the identification of the Zigbee device (160) carried in the control instruction, and forward the control instruction to the corresponding Zigbee device (160) via the Zigbee chip (144); and
the Zigbee device (160) is configured to receive the control instruction forwarded by the Zigbee gateway (140),
wherein a network type corresponding to the target network chip (142) is different from that of a Zigbee network.

2. The system of claim 1, wherein the control instruction further carries identification of the Zigbee gateway (140); and
the server (120) is configured to acquire the identification of the Zigbee gateway (140) carried in the control instruction, and forward the control instruction to the Zigbee gateway (140) according to the identification of the Zigbee gateway (140).

3. The system of claim 1, wherein
the server (120) is configured to determine identification of the Zigbee gateway (140) based on a prestored corresponding relationship according to the identification of the Zigbee device (160), add the identification of the Zigbee gateway (140) to the control instruction, and send the control instruction to the Zigbee gateway (140) according to the identification of the Zigbee gateway (140).

4. The system of claim 3, wherein
the Zigbee device (160) is further configured to report a corresponding relationship between the identification of the Zigbee gateway (140) and the identification of the Zigbee device (160) to the server (120) when the Zigbee device (160) accesses the Zigbee gateway (140); and
the server (120) is configured to store the corresponding relationship.

5. The system of any one of claims 2 to 4, wherein a network type corresponding to the target network chip (142) is a WIFI network;
the identification of the Zigbee device (160) is a media access control address; and the identification of the Zigbee gateway (140) is a device identification.

6. A method for data communication, comprising:
receiving (202) a control instruction, wherein the control instruction carries identification of a Zigbee device; and
forwarding (204) the control instruction to a Zigbee gateway, wherein the Zigbee gateway is configured to receive the control instruction via a target network chip, the Zigbee gateway is further configured to acquire the identification of the Zigbee device carried in the control instruction, and the Zigbee gateway is further configured to forward the control instruction to the Zigbee device corresponding to the identification of the Zigbee device via the Zigbee chip,
wherein a network type corresponding to the target network chip is different from that of a Zigbee network.

7. The method of claim 6, wherein the control instruction carries the identification of the Zigbee device, and
the forwarding the control instruction to the Zigbee gateway comprises:
acquiring (302) identification of the Zigbee gateway carried in the control instruction; and
forwarding (303) the control instruction to the Zigbee gateway according to the identification of the Zigbee gateway.

8. The method of claim 6, wherein the forwarding the control instruction to the Zigbee gateway comprises:
determining (405) identification of the Zigbee gateway based on a prestored corresponding relationship according to the identification of the Zigbee device;
adding (406) the identification of the Zigbee gateway to the control instruction; and
sending (407) the control instruction to the Zigbee gateway according to the identification of the Zigbee gateway.

9. The method of claim 8, further comprising:
receiving a corresponding relationship sent by the Zigbee device, wherein the corresponding relationship is reported when the Zigbee device accesses the Zigbee gateway, and the corresponding relationship is a corresponding relationship between the identification of the Zigbee gateway and the identification of the Zigbee device; and
storing the corresponding relationship.

10. The method of any one of claims 6 to 9, wherein a network type corresponding to the target network chip is a WIFI network;
the identification of the Zigbee device is a media access control address; and
the identification of the Zigbee gateway is a device identification.

11. An apparatus for data communication, comprising:
a first receiving module (520) configured to receive a control instruction, wherein
the control instruction carries identification of a Zigbee device; and
a sending module (540) configured to forward the control instruction to a Zigbee gateway, wherein the Zigbee gateway is configured to receive the control instruction via a target network chip, the Zigbee gateway is further configured to acquire the identification of the Zigbee device carried in the control instruction, and the Zigbee gateway is further configured to forward the control instruction to the Zigbee device corresponding to the identification of the Zigbee device via the Zigbee chip,
wherein a network type corresponding to the target network chip is different from that of a Zigbee network.

12. The apparatus of claim 11, wherein the control instruction carries the identification of the Zigbee device; and
the sending module (540) is configured to acquire identification of the Zigbee gateway carried in the control instruction, and forward the control instruction to the Zigbee gateway according to the identification of the Zigbee gateway.

13. The apparatus of claim 11, further comprising:
an inquiring module (530) configured to determine identification of the Zigbee gateway based on a prestored corresponding relationship according to the identification of the Zigbee device, wherein
the sending module (540) is configured to add the identification of the Zigbee gateway to the control instruction, and send the control instruction to the Zigbee gateway according to the identification of the Zigbee gateway.

14. The apparatus of claim 13, further comprising:
a second receiving module (512) configured to receive a corresponding relationship sent by the Zigbee device, wherein the corresponding relationship is reported when the Zigbee device accesses the Zigbee gateway, and the corresponding relationship is a corresponding relationship between the identification of the Zigbee gateway and the identification of the Zigbee device; and
a storing module (514) configured to store the corresponding relationship.

15. AZigbee gateway, comprising:
a control chip (820);
a memory (840) for storing instructions executable by the control chip (820), and
a target network chip (860) and a Zigbee chip (880) connected with the control chip (820);
wherein the control chip (820) is configured to perform:
receiving a control instruction via the target network chip (860), wherein the control instruction carries identification of a Zigbee device;
acquiring the identification of the Zigbee device carried in the control instruction; and
forwarding the control instruction to the Zigbee device corresponding to the identification via the Zigbee chip (880),
wherein a network type corresponding to the target network chip (860) is different from that of a Zigbee network.
